# EUROPEAN PATENT APPLICATION

(11) **EP 1 657 571 A2**
(43) Date of publication of application: **17.05.2006**
(21) Application number: 05256955.5
(22) Date of filing: 10.11.2005
(51) Int. Cl.: G01T 3/00

(54) **Elliptical gas-filled detector for radiation detection**

(30) Priority: 15.11.2004 US 987209
(71) Applicant: General Electronic Company, Schenectady, NY 12345 (US)
(72) Inventor: Clarke, Lucas Lamar, Uniontown Ohio 44685 (US); Weissman, Eric Martin, Chagrin Falls Ohio 44022 (US); Kniss, Timothy Albert, Cuyahoga Falls Ohio 44221 (US); Johnson, Nathan Herbert, Garfield Heights Ohio 4411125 (US); Shalhoub, Andrew Emanuel, Stwo Ohio 44224 (US); Exline, Paul Charles, University Heights Ohio 44118 (US); Anderson, Thomas Robert, Perry Ohio 44081 (US); Palmer, Brian Marshall, Twinsburg Ohio 44087 (US)
(74) Representative: Goode, Ian Roy

(57) **Abstract**

A radiation detector (20) includes an outer casing (22) filled with a gas under pressure, an anode (24) and a cathode (22). The casing (22) is formed to have a uniform elliptical cross-section along at least the entirety of its sensing length.

## Description

This invention relates to gas filled radiation detectors and, specifically, to an HE-3-filled neutron radiation detector construction.

Gas-filled detectors typically consist of a chamber filled with a gas (for example, air or helium) and two voltage plates or electrodes. The positive electrode, or anode, is typically a wire located along the longitudinal center axis of the chamber that is electrically insulated from the outer casing. The outer casing itself often comprises the negative electrode, or cathode.

Incoming radiation interacts with the walls of the detector or the gas particles within the chamber and produces ion pairs. When a voltage is applied between the electrodes, positive ions are attracted to the negatively-charged cathode while electrons are attracted to the positively-charged anode. A charge builds up on the anode, causing a voltage change in the circuit. The voltage change or pulse causes current to flow in the external circuit, permitting the presence of ionizing radiation to be detected.

Existing gas-filled radiation detectors are typically in the form of a long cylindrical tube. In many applications, these detectors are used in such a way that they are required to yield the position of radiation interaction along the longitudinal axis of the detector. In other cases, arrays of plural detectors may be used. In such cases, a horizontal orientation of the radiation detector, normal to the longitudinal axis, may be highly desirable. This horizontal resolution is limited by several factors. One of these is how closely the detectors may be placed relative to one another. Another is the pressure of the gas inside the detector, which will help determine the likelihood of a radiation interaction event inside the detector. Additionally, the path length through which the radiation must pass will also help to determine the probability of an interaction. For cylindrical vessel designs, efficiency decreases substantially for interactions in the outer radius of the detector.

There is a need for a unique gas-filled radiation detector which will allow the path length, fill pressure, and detector spacing to be optimized such that improved horizontal resolution may be obtained.

The present invention relates to a gas filled detector, for example, an HE-3 filled detector, which has an elliptical shape (with major and minor axes) along at least its entire sensing length. In addition, nowhere along the entire length dimension of the detector is there any protrusion beyond the elliptical dimension along the minor axis thereof. Accordingly, the elliptical shape allows closer spacing of adjacent detector anodes (when incorporated into a multi-detector array) while maximizing efficiency through the major axis of the ellipse. This will allow for users of multiple detectors to achieve maximum efficiency of radiation detection along with the highest possible horizontal detection resolution. The detector dimensions may vary significantly, as long as recognizable major and minor axes are maintained. A variety of detector lengths may be employed as required by particular end uses. The gas pressure may also vary according to the required efficiency of the detector as well as the length of the major axis in the detector.

The detector may also have conventional ceramic-to-metal seals protruding from either one or both of the ends of the detector, depending on the end use application. These ceramic-to-metal seals allow the conduction of the signal from the internal anode wire to some external charge measuring/processing device.

Accordingly, in its broader aspects, the present invention relates to a radiation detector comprising an outer casing filled with a gas under pressure, an anode and a cathode; the casing having a sensing length equal to or less than an entire length dimension of the casing, the casing having a uniform elliptical cross-section along at least the entirety of its sensing length.

In another aspect, the present invention relates to an array of adjacent gas-filled radiation detectors, each detector having a casing filled with a gas under pressure, an anode and a cathode; each casing having a sensing length equal to or less than an entire length dimension of the casing, the casing having a uniform elliptical cross-section along at least the entirety of its sensing length.

The invention will now be described in detail in connection with the accompanying drawings, in which:
FIGURE 1 is a schematic diagram of a typical gas-filled radiation detector;
FIGURE 2 is a schematic cross-sectional view of a horizontally-oriented array of known cylindrical gas filled radiation detectors; and
FIGURE 3 is a schematic cross-sectional view of a horizontal array of elliptical gas-filled radiation detectors in accordance with an exemplary embodiment of this invention.

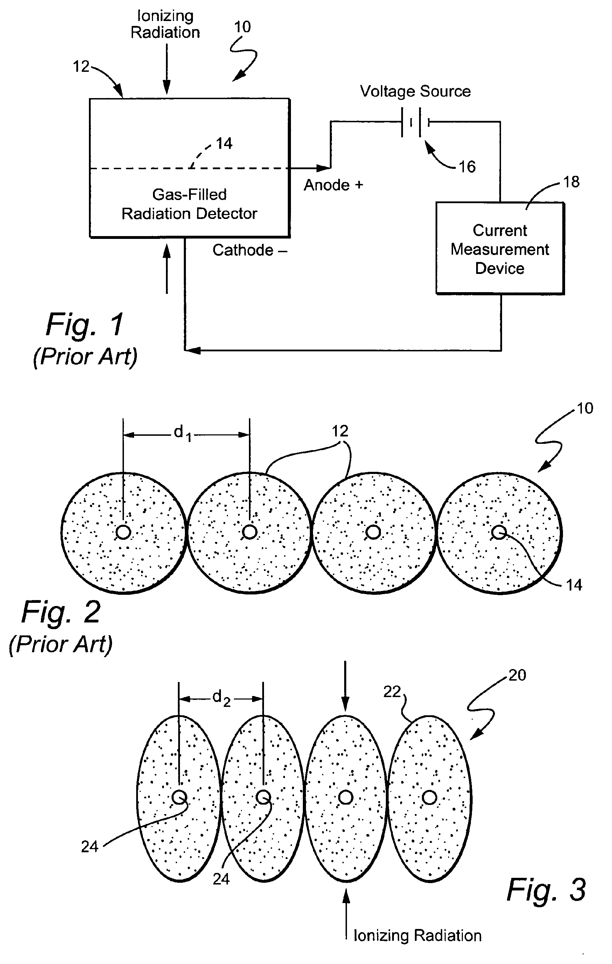

With reference now to Figure 1, a typical gas-filled radiation detector 10 includes a substantially cylindrical casing 12 filled with a gas and including an internal anode 14 centered along the longitudinal axis of the detector. The anode 14 may be a conductive wire as commonly utilized in gas-filled radiation detectors. The outer casing 12 of the detector also serves as the negative electrode or cathode.

Charged particles such as Neutrons, X-rays or gamma rays entering the detector 10 strip electrons from the gas atoms to produce positively charged ions and negatively charged electrons. An electric field created by several hundred volts or more across the electrodes draws the ions to the negative electrode or cathode 12 and the electrons to the positive electrode or anode 14. Electron flow produces a current pulse which is the detection signal. To this end, a current measurement device or charge sensitive amplifier 18 is located in the circuit between a voltage source 16 and the cathode 12. The magnitude of the electric field determines the detector's mode of operation. Thus, the detector may operate as an ionization chamber, a proportional counter, or a Geiger counter, respectively, as the electric field increases.

As already mentioned above, there are many instances where arrays of plural detectors are required, and in many instances, a horizontal orientation of the detectors is highly desirable. An array of the detectors 10 in this horizontal orientation is shown in Figure 2. With this orientation, it may be seen that the anode spacing, i.e., the horizontal distance between anodes of adjacent detectors is equal to d₁. This distance, along with the pressure of the filling gas inside the detector, determines in part the performance and sensitivity of the detector.

Referring now to Figure 3, a plural array of radiation detectors 20 in accordance with an exemplary embodiment of this invention is illustrated. Significantly, each detector 20 is formed with a housing or casing 22 that is elliptical in cross-section along its entire length dimension. While the detector dimensions may vary, it is important that recognizable major and minor axes be present. In addition, while the detector in the exemplary embodiment has an elliptical shape along its entire length dimension, it is important that the detector have an elliptical shape at least along its entire sensing length which may be less than the entire length dimension. It is also important that there be no protrusion anywhere along the length dimension in a direction along the minor axis of the detector to ensure the ability to locate a plurality of detectors in the array as shown in Figure 3. With the ionizing radiation entering in a direction parallel to the major axis, the twin advantages of closer spacing between adjacent anodes but greater path length for the radiation (that increases the probability of detection) are maintained.

The length of the detectors 20 may, of course, vary as required by particular applications. In addition, fill pressures of the He-3 gas (or other suitable gas, depending on the type of radiation being detected) may also vary according to the required efficiency of the detector, as well as the length of the major axis of the detector.

In one exemplary embodiment, the detector housing 22 is three inches in length, and the elliptical shape is defined by a 0.4 inch minor axis and a 1.4 inch major axis. It can be seen that the horizontal distance d₂ between the detector anodes 24 is less than d₁ in Figure 2, resulting in higher efficiency. The fill pressure of this detector should be such that at one half of the yield strength based on the casing material and wall thickness will not rupture or explode within four times the fill pressure.

Aluminum and stainless steel are suitable construction materials for the outer casing of the detector but other metals such as carbon steel, nickel-chromium alloys such as Inconel®, and nickel-copper alloys such as Monel® as well as titanium may be used. A typical wall thickness may vary depending on the fill pressure and casing size but 0.02 inch represents a desirable exemplary thickness.

Each detector 20 may have ceramic-to-metal seals protruding from either one or both of the ends of the detector, depending on the end use application. Such seals alloy conduction of the signal from the internal anode wire to some external charge measuring/processing device.

## Claims

1. A radiation detector (20) comprising an outer casing (22) filled with a gas under pressure, an anode (24) and a cathode (22); said casing (22) having a sensing length equal to or less than an entire length dimension of the casing, said casing having a uniform elliptical cross-section along at least the entirety of its sensing length.

2. The radiation detector of claim 1 wherein said casing (22) serves as the cathode.

3. The radiation detector of claim 2 wherein the anode (24) comprises a wire extending substantially along a longitudinal axis of the casing (12).

4. The radiation detector of claim 1 wherein said casing (22) is constructed of aluminum.

5. The radiation detector of claim 1 wherein said casing (22) is constructed of stainless steel.

6. The radiation detector of claim 1 wherein said casing (22) is constructed of a nickel-chromium alloy.

7. The radiation detector of claim 1 wherein said casing (22) is constructed of a nickel-copper alloy.

8. The radiation detector of claim 1 wherein said casing (22) is about 3 inches long and has a major axis of about 1.4 inches and a minor axis of about 0.4 inch.

9. The radiation detector of claim 1 wherein said gas is helium.

10. An array of adjacent gas-filled radiation detectors (20), each detector having a casing (22) filled with a gas under pressure, an anode (24) and a cathode (22);
each said casing having a sensing length equal to or less than an entire length dimension of the casing, said casing (22) having a uniform elliptical cross-section along at least the entirety of its sensing length; wherein longitudinal axes of respective detector casings (22) are parallel; and wherein each detector housing (22) has a longitudinal axis and wherein said elliptical cross-section is defined by a major axis and a minor axis, and wherein respective major axes of said detectors (20) are in a vertical and parallel orientation.
